# EUROPEAN PATENT APPLICATION

(11) **EP 4 591 695 A1**
(43) Date of publication of application: **30.07.2025**
(21) Application number: 24216782.3
(22) Date of filing: 02.12.2024
(51) Int. Cl.: A01D 34/00, G01S 19/48, G05D 1/248, G05D 105/15, G05D 111/67

(54) **IMPROVED DETERMINATION OF POSITION FOR A ROBOTIC WORK TOOL**

(30) Priority: 15.12.2023 SE 2351436
(71) Applicant: Husqvarna AB, 561 82 Huskvarna (SE)
(72) Inventor: Rangsjö, Jonas, Huskvarna (SE); Liljedahl, Marcus, Huskvarna (SE); Chedid, Michel, Huskvarna (SE); Ärlig, Ulf, Huskvarna (SE)

(57) **Abstract**

A method for a robotic work tool (100) arranged to operate in an operational area (205), and the robotic work tool (100) comprising a absolute position navigation sensor (175) and additional navigation sensors (180) grouped in one or more channels. The method comprises receiving (610) sensor input from the absolute position navigation sensor (175), the sensor input indicating a absolute position for the robotic work tool (100), determining (620) if the absolute position is a trusted position. If so, selecting (630) the absolute position as a position to be used for navigating the robotic work tool, and wherein the method further comprises receiving (615) sensor input from the one or more additional sensors (180) through the one or more channels. If the absolute position is not trusted, a position of selected channel(s) is selected (660) as the position to be used for navigation.

## Description

### TECHNICAL FIELD

This application relates to a robotic work tool, such as a lawnmower, and a method for providing an improved determination of a position for the robotic work tool, and in particular to a robotic work tool, such as a lawnmower, and a method for providing an improved determination of a position for the robotic work tool utilizing sensor navigation as an alternative or supplement to satellite navigation.

### BACKGROUND

Automated or robotic work tools such as robotic lawnmowers are becoming increasingly more popular and so is the use of the robotic work tool in various types of operational areas.

Operating requirements, in particular for robotic work tools being robotic lawnmowers, often include requirements both relating to safety (such as staying inside boundaries) and requirements to perform (advanced) patterns and also to take into account local features (such as flowerbeds). Utilizing navigation techniques relying on for example satellite navigation, V-SLAM or other absolute positioning methods (where a position in for example a map is determined) will enable for all such requirements to be used, as long as the satellite position is trusted (can be determined reliably). It should be noted that "trusted" is a recognized terminology in satellite navigation and needs no further explanation. When satellite reception is not trusted, many contemporary robotic work tools rely on alternative or supplemental navigation techniques, such as relative positioning systems, visual navigation, deduced navigation, or other sensor-based navigation. However, all such navigation techniques suffer from various drawbacks, all resulting in that the position determined is not always accurately determined.

Thus, there is a need for an improved manner of providing advanced navigational functionality utilizing sensor-based based navigation as an alternative to satellite navigation.

### SUMMARY

It is therefore an object of the teachings of this application to overcome or at least reduce those problems by providing a robotic work tool system comprising a robotic work tool arranged to operate in an operational area, and the robotic work tool comprising a controller, a memory, an absolute position navigation sensor and one or more additional navigation sensors grouped in one or more channels, and wherein the controller is configured to receive sensor input from the absolute position navigation sensor, the sensor input indicating a absolute position for the robotic work tool, determine if the absolute position is a trusted position, and if so, select the absolute position as a position to be used for navigating the robotic work tool, wherein the robotic work tool is further configured to receive sensor input from the one or more additional sensors through the one or more channels, and if the absolute position is determined to not be trusted, select at least one channel and selecting a position of the selected channel(s) as the position to be used for navigation.

In some embodiments the robotic work tool is a robotic lawnmower.

It is also an object of the teachings of this application to overcome the problems by providing a method for use in a robotic work tool system comprising a robotic work tool arranged to operate in an operational area, and the robotic work tool comprising an absolute position navigation sensor and one or more additional navigation sensors grouped in one or more channels, and wherein the method comprises receiving sensor input from the absolute position navigation sensor, the sensor input indicating a absolute position for the robotic work tool, determining if the absolute position is a trusted position, and if so, selecting the absolute position as a position to be used for navigating the robotic work tool, and wherein the method further comprises receiving sensor input from the one or more additional sensors through the one or more channels, and if the absolute position is determined to not be trusted, selecting at least one channel and selecting a position of the selected channel(s) as the position to be used for navigation.

It is also an object of the teachings of this application to overcome the problems by providing a computer-readable medium carrying computer instructions that when loaded into and executed by a controller of a robotic work tool enables the robotic work tool to implement the method according to herein.

Further embodiments and aspects are as in the attached patent claims and as discussed in the detailed description.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1 shows a schematic view of the components of an example of a robotic work tool being a robotic lawnmower according to some example embodiments of the teachings herein;
Figure 2 shows a schematic view of a robotic work tool system according to some example embodiments of the teachings herein;
Figure 3A shows a schematic view of a sensor array of a robotic work tool system according to some example embodiments of the teachings herein;
Figure 3B shows a schematic view of a sensor array of a robotic work tool system according to some example embodiments of the teachings herein;
Figure 3C shows a schematic view of a sensor array of a robotic work tool system according to some example embodiments of the teachings herein;
Figure 4 shows a schematic view of a sensor array of a robotic work tool system according to some example embodiments of the teachings herein;
Figures 5A, 5B and 5C each shows a schematic view of a robotic work tool system according to some example embodiments of the teachings herein;
Figure 6 shows a corresponding flowchart for a method according to some example embodiments of the teachings herein; and
Figure 7 shows a schematic view of a computer-readable medium carrying computer instructions that when loaded into and executed by a controller of a robotic work tool, enables the robotic work tool to implement the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

It should be noted that even though the description given herein will be focused on robotic lawnmowers, the teachings herein may also be applied to, robotic ball collectors, robotic mine sweepers, robotic farming equipment, or other robotic work tools.

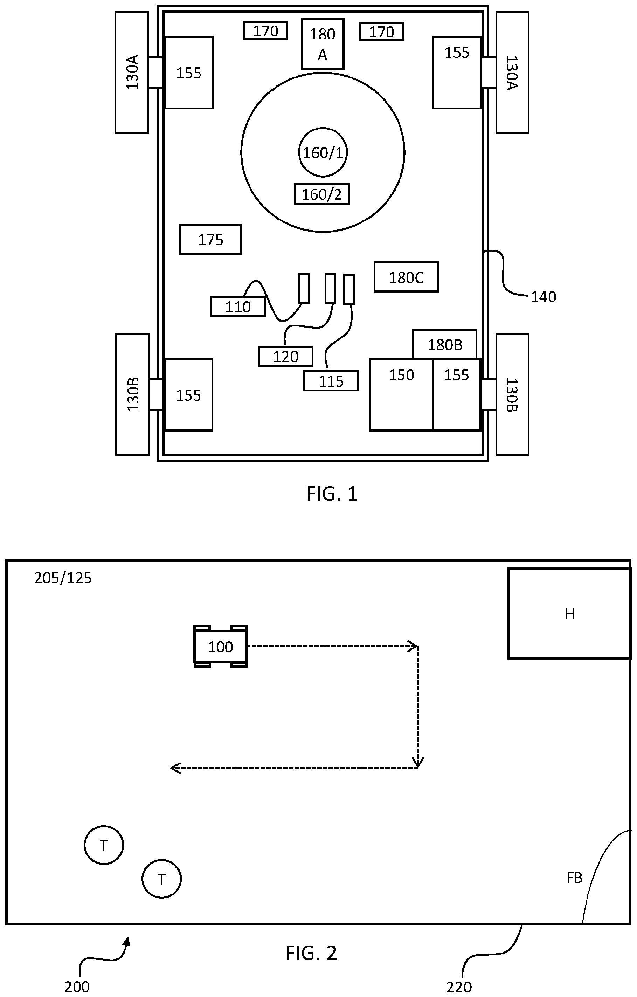

Figure 1 shows a schematic overview of a robotic work tool 100, here exemplified by a robotic lawnmower 100. The robotic work tool 100 may be a multi-chassis type or a mono-chassis type (as in figure 1). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots, to even more than 1 meter for large robots arranged to service for example airfields.

It should be noted that even though the description herein is focussed on the example of a robotic lawnmower, the teachings may equally be applied to other types of robotic work tools, such as robotic watering tools, robotic golf ball collectors, and robotic mulchers to mention a few examples.

In some embodiments, and as will be discussed below, the robotic work tool is a semi-controlled or at least supervised autonomous work tool, such as farming equipment or large lawnmowers (for example riders). In some embodiments the robotic work tool comprises tractors being autonomously controlled.

It should also be noted that the robotic work tool is a self-propelled robotic work tool, capable of autonomous navigation within an operational area, where the robotic work tool propels itself across or around the operational area in a pattern (random or predetermined).

The robotic work tool 100, exemplified as a robotic lawnmower 100, has a main body part 140, possibly comprising a chassis 140 and an outer shell, and a plurality of wheels 130 (in this example four wheels 130, but other number of wheels are also possible, such as three or six). The main body part 140 substantially houses all components of the robotic lawnmower 100. At least some of the wheels 130 are drivably connected to at least one electric motor 155 powered by a battery 150. It should be noted that even if the description herein is focused on electric motors, combustion engines may alternatively be used, possibly in combination with an electric motor. In the example of figure 1, each of the wheels 130 is connected to a common or to a respective electric motor 155 for driving the wheels 130 to navigate the robotic lawnmower 100 in different manners. The wheels, the motor 155 and possibly the battery 150 are thus examples of components making up a propulsion device. By controlling the motors 155, the propulsion device may be controlled to propel the robotic lawnmower 100 in a desired manner, and the propulsion device will therefore be seen as synonymous with the motor(s) 150. It should be noted that wheels 130 driven by electric motors is only one example of a propulsion system and other variants are possible such as caterpillar tracks.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower.

The controller 110 may be implemented using any suitable, available processor or Programmable Logic Circuit (PLC). The memory 120 may be implemented using any commonly known technology for computer-readable memories such as ROM, FLASH, DDR, or some other memory technology.

The robotic lawnmower 100 also comprises a work tool 160, which in the example of the robotic lawnmower 100 is a grass cutting device 160, such as a rotating blade 160/2 driven by a cutter motor 160/1. In embodiments where the robotic work tool 100 is exemplified as an automatic grinder, the work tool 160 is a rotating grinding disc.

For enabling the robotic lawnmower 100 to navigate with reference to a wire, such as a boundary wire or a guide wire, emitting a magnetic field caused by a control signal transmitted through the wire, the robotic lawnmower 100 is, in some embodiments, configured to have at least one magnetic field sensor 170 arranged to detect the magnetic field and for detecting the wire and/or for receiving (and possibly also sending) information to/from a signal generator. In some embodiments, such a magnetic boundary is used to provide a (electromagnetic) boundary (not shown explicitly in figure 2, but deemed to be included in the boundary 220) enclosing an operational area (referenced 205 in figure 2).

The robotic lawnmower 100 comprises an absolute position sensor 175.

In some embodiments the absolute position sensor 175 is a beacon navigation sensor for example for receiving (Ultra-Wide Band) UWB signals from UWB beacons. Optical beacon sensors may also be used. Beacon sensor navigation works by receiving three (or more) signals from different beacons and based on the properties of the received signals determine a distance to the beacons, and then triangulate the absolute position. In some embodiments an absolute position sensor is a SLAM system or a V-SALM system. The absolute position sensor is generally a sensor that enables for determining an absolute position - for example in a map.

In some embodiments the absolute position sensor 175 is a satellite signal navigation sensor 175 configured to provide navigational information (such as position) based on receiving one or more signals from a satellite - possibly in combination with receiving a signal from a base station. In some embodiments the satellite navigation sensor is a GPS (Global Positioning System) device or other Global Navigation Satellite System (GNSS) device. In some embodiments the satellite navigation sensor 175 is a RTK sensor. This enables the robotic work tool to operate in an operational area bounded by a virtual border (not shown explicitly in figure 2 but deemed to be included in the boundary 220).

The satellite navigation sensor is configured to provide a position. Depending on positions of the satellites relative the robotic work tool and environmental factors in or close to the work area, the accuracy of the position determined through satellite navigation sensor 175 may vary. In the field of satellite navigation, and herein, a "Trusted fix" is a RTK fix position that has been confirmed to be correct, i.e. it shall (with very high probability) be correct according to its reported accuracy.. In some embodiments if the accuracy of the position has not been confirmed, it is a 'false fix'. In some embodiments a "false fix" is when a position has been reported to be of high accuracy but is actually incorrect. Hereafter both possibilities will be referred to as a "false fix".

Similarly, a "trusted position" indicates if a position is valid to be used for inside/outside checks and calculation of new 'odometry budget'. The position is considered trusted if: it is a trusted fix or the distance between the positions calculated by two (or more) selected channels (more on this later) is less than X mm, where X is half the mower length or 500 mm, whichever is smallest.

The controller 110 is in some embodiments configured to check a TRUSTED flag to determine if the position determined is trusted. This Trusted flag can be set by the RTK sensor based on the RTK sensor determining that its accuracy is good enough - trusted. This Trusted flag can be set based on the calculation of the two positions above.

The robotic lawnmower 100 also comprises other or additional sensors 180. In some embodiments these additional sensors 180 comprises deduced reckoning sensors 180B. The deduced reckoning sensors 180B may be odometers, accelerometers or other deduced reckoning sensors. In some embodiments these additional sensors 180 comprises a visual navigation sensor 180A, possibly comprised in or connected to the deduced reckoning sensors 180B. In some embodiments, the visual navigation sensor is a camera or other image sensor, allowing for image processing to be used to perform a position determination as is known in the field of robot navigation. In some embodiments, the navigation is based on SLAM, and in some embodiments, where a visual navigation sensor (such as a camera) 180A is utilized, the navigation is based on V-SLAM.

In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel.

In some embodiments these additional sensors 180 comprises other sensors 180C, for example a radar sensor and/or an Inertial Measurement Unit (IMU) sensor, both being examples of sensor 180C.

The satellite navigation sensor 175, as well as the additional sensors 180, alone or in any combination, enables the robot to operate according to a map of the operational area.

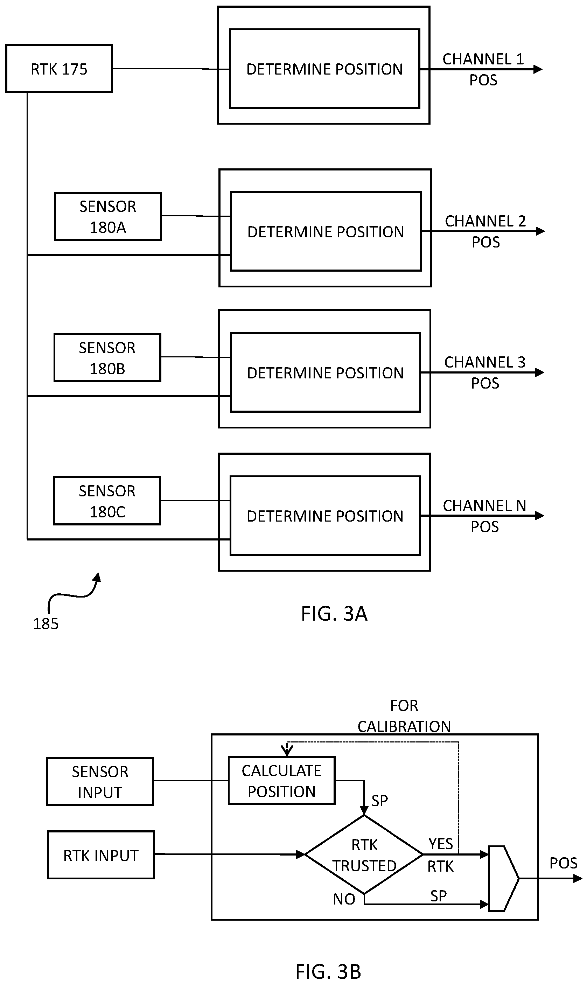

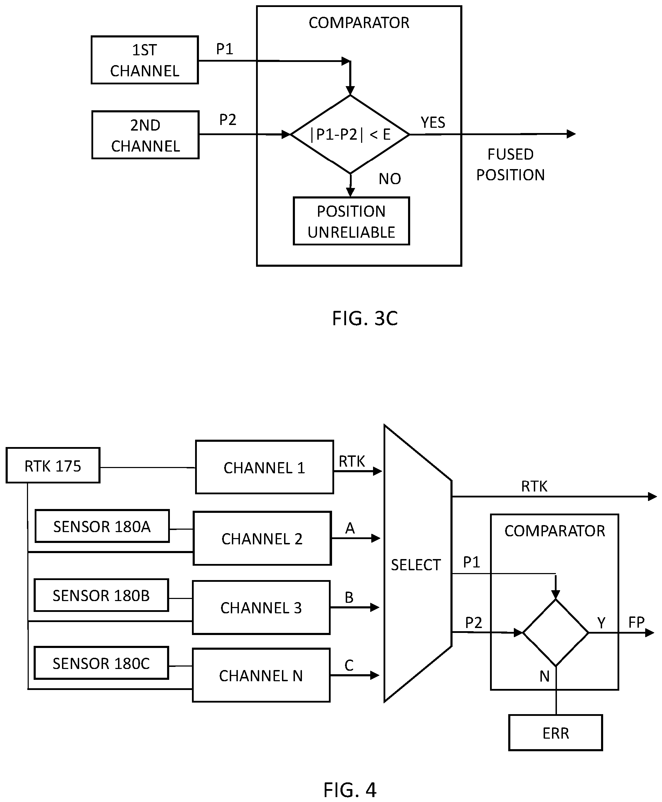

As will be further discussed in relation to figure 3, the navigation sensors are grouped in various (sensor) channels and the controller 110 is configured to select which channel to be used for determining the position. In embodiments where the robotic work tool 100 is arranged with magnetic sensors 170, these may also be used for navigating and determining a position, for example by correlating a determined amplitude of a sensed electromagnetic field with a position. In such embodiments the electromagnetic sensors 170 may be seen as one example of additional sensors 180, and are hereafter referred to as such, unless specifically mentioned otherwise.

Furthermore, the controller 110 is configured to determine a flag called Reliable, which 'Reliable' flag (true/false) is used for position channels, for example, one flag per channel. It indicates the quality of the position determined by that channel. The flag is based on internal properties within each channel. For example, a scale factor (in visual navigation channel), slip detection, position accuracy.

It should be noted that this determination may be made by the controller 110 of the robotic work tool, or of a controller of respective sensor. However, as the controller 110 is considered to possibly comprise several different processors, collectively referred to as the controller, the function of the controller may be performed by a processor located in the robotic work tool main control chip or in one or many of the sensors. For the purpose of the teachings herein, both - and other - possibilities are commonly referred to as the controller executing various tasks.

As mentioned, the robotic lawnmower 100 is (in some embodiments) arranged to operate according to a map application (indicated in figure 2 and referenced 125) representing one or more operational areas (and possibly the surroundings of the operational area(s)) as well as features of the operational area(s) stored in the memory 120 of the robotic lawnmower 100. In some embodiments, the map application, or simple the map 125, may be generated or supplemented as the robotic lawnmower 100 operates or otherwise moves around in the operational area. In some embodiments, the map application is downloaded, possibly from a server. In some embodiments, the map application also includes one or more transport areas.

In some embodiments, the robotic lawnmower 100 is further arranged with a wireless communication interface 115 for communicating with other devices, such as a server, a personal computer, a smartphone, the charging station, and/or other robotic work tools. Examples of such wireless communication devices are Bluetooth^{®}, WiFi^{®} (IEEE802.11b), Global System Mobile (GSM) and LTE (Long Term Evolution), to name a few. The robotic lawnmower 100 may be arranged to communicate with a user equipment for providing information regarding status, location, and progress of operation to the user equipment as well as receiving commands or settings from the user equipment. Alternatively or additionally, the robotic lawnmower 100 may be arranged to communicate with a server for providing information regarding status, location, and progress of operation as well as receiving commands or settings. The robotic lawnmower 100 may - in some embodiments - especially be configured for receiving indications of weather.

In some embodiments the robotic work tool is arranged or configured to traverse and operate in operational areas that are not essentially flat, but contain terrain that is of varying altitude, such as undulating, comprising hills or slopes or such. The ground of such terrain is not flat and it is not straightforward how to determine an angle between a sensor mounted on the robotic work tool and the ground. The robotic work tool is also or alternatively arranged or configured to traverse and operate in an operational area that contains obstacles that are not easily discerned from the ground. Examples of such are grass or moss-covered rocks, roots or other obstacles that are close to ground and of a similar colour or texture as the ground. The robotic work tool is also or alternatively arranged or configured to traverse and operate in an operational area that contains obstacles that are overhanging, i.e. obstacles that may not be detectable from the ground up, such as low hanging branches of trees or bushes in a garden. Such a area is thus not simply a flat lawn to be mowed or similar, but an operational area of unpredictable structure and characteristics. The operational area exemplified with referenced to figure 2, may thus be such a non-uniform operational area as disclosed in this paragraph that the robotic work tool is arranged to traverse and/or operate in.

Figure 2 shows a robotic work tool system 200 in some embodiments. The schematic view is not to scale. The robotic work tool system 200 comprises one or more robotic work tools 100 according to the teachings herein arranged to operate in one or more operational areas 205 bounded by a boundary 220. It should be noted that the operational area 205 shown in figure 2 is simplified for illustrative purposes. The view of the operational area 205 is also intended to be an illustration or graphical representation of the map application 125 discussed in the above. The boundary may be a virtual boundary based on the map application 125, as discussed in the above. The virtual boundary may in some embodiments be supplemented by an electromagnetic boundary.

As with figure 1, the robotic work tool(s) is exemplified by a robotic lawnmower, whereby the robotic work tool system may be a robotic lawnmower system or a system comprising a combinations of robotic work tools, one being a robotic lawnmower, but the teachings herein may also be applied to other robotic work tools adapted to operate within an operational area.

As is shown in figure 2 there may be obstacles such as houses (referenced H), structures, flowerbeds (referenced FB), or trees (referenced T) to mention a few examples in the operational area 205. As noted above

Figure 3A shows a schematic view of a sensor array 185 and how it can, in one example, be arranged to provide a position, or rather one or more channels for providing a position.

In figure 3A a first channel (CHANNEL 1) is indicated to determine a position based on the satellite navigation sensor 175 (here exemplified by an RTK sensor) alone. As would be known, the determination may be performed by the sensor 175 or by the controller 110, or by a combination of the two. As is also known it is determined whether the sensor input provided from the RTK sensor 175 has an acceptable accuracy or not, which can be determined as a determination of signal quality of signals received and/or the number of signals received. As it is well-known how to determine if a satellite sensor is reliable, not further details will be given herein. Referring to what is stated above with reference to figure 1, it is, in some embodiments, determined if the position is a trusted fix or not, and if so, a Reliable fag, which can be the Trusted flag, is set to indicate this. As this flag is set, the controller 110 will select the RTK channel (CHANNEL 1) for the determination of position for the robotic work tool 100.

As can also bee seen in figure 3A, there are other channels. The number of channels will depend on the number of sensors of the robotic work tool 100, and how these sensors are grouped. It should be noted that in each block or group representing a sensor in figure 3A, the group may compromise one or more sensors 180. However, in some embodiments, one sensor may only be part of one group. So, a sensor may have one or more sensors, but a sensor may only belong to one group in such an embodiment. In other embodiments, the same sensor grouping may not appear in different channels. For example a pairing of odometry and IMU should not disqualify a pairing of radar and IMU, but the same parings may not be part of other channels. In some embodiments, a channel may comprise more than one sensor and each sensor may be grouped or paired in more than one channel. However, in such embodiments, the controller is configured to only select channels with mutually exclusive sensors. That is the selected channels may each comprise more than one sensor, but each sensor may only be in one selected channel.

Figure 3B shows a schematic example of how such a group of sensors is to operate. Sensor input is received from which a position is calculated and a sensor position, SP, is provided as an intermediate step. It is determined whether the RTK position is trusted or not, which can be determined by simply checking the Trusted flag or through another determination, as would be known to a skilled person. If the RTK position is determined to be trusted, the RTK position is - in some embodiments - utilized to calibrate the calculation of the sensor position, i.e. to align the sensor with other sensors to provide a same or at least similar position, as indicated by the dotted arrow, for future use. This enables the sensor position to be up to date, and continuously or repeatedly aligned. The alignment can be made through calibrating the sensor In some embodiments. As noted above, the RTK position will be used for the actual position for navigating the robotic work tool 100 as mentioned above in regards to the RTK channel

If the RTK position is determined to not be trusted, the sensor position will be used as the position for the channel, and possibly selected by the controller for navigating the robotic work tool 100. Also, in embodiments where the sensor is calibrated, the false fix (i.e. not reliable RTK position) will not be used for calibration of the sensor. It should be noted that even though the schematic view of figure 3B shows the determination whether trusted or not and the selection of sensor position SP or RTK position is done in the determination block, this determination can of course be done outside, by a central decision, whereby the RTK cannel (CHANNEL 1) is selected if the RTK is trusteed, and another, originating from one of the sensor groups, i.e the additional sensor channels (CHANNEL 2, CHANNEL 3 and CHANNEL N) being selected if the RTK position is not trusted.

One example of a channel setup for a sensor array 185 as in figure 3A is where the first channel is an RTK channel, the second channel is a vision channel (wherein the sensor 180 comprises the camera 180A), the third channel is a deduced reckoning channel (wherein the sensor 180 comprises the wheel odometry sensor and an accelerometer (for determining turning)), and wherein the Nth channel is a radar channel (wherein the sensor 180 comprises a radar sensor).

As discussed above, the robotic work tool 100 is thus configured (through the controller 110) to determine if the RTK position is trusted (such as by checking the Trusted flag) and if so, selecting the RTK channel (being the channel with the highest priority), and if not, selecting one of the other or additional channels (CHANNEL 2, CHANNEL 3, CHANNEL N), also referred to as sensor channels, for providing the position.

In some embodiments the robotic work tool 100 is configured (through the controller 110) to select a sensor channel based on a priority of the sensor channel, wherein a high priority for a channel indicates a selection order for that channel coming before another channel with a lower priority. The priority thus indicates a selection order, where a higher priority is selected before a lower priority.

In some embodiments the robotic work tool 100 is configured (through the controller 110) to select a sensor channel based on a determined accuracy of the sensor channel. In such embodiments the determination of the accuracy may be performed by the controller or by the sensor or a combination of the two. Furthermore, in such embodiments the determination of the accuracy may be performed based on an error perceived at a previous calibration. If the latest calibration showed a large error or compensation, the sensor may be assumed to not be accurate, and the error shown can be an indication of the accuracy. In alternative such embodiments, the determination of the accuracy may be performed based on an average error perceived at previous calibrations. In alternative such embodiments, the determination of the accuracy may be performed based on an error trend perceived for previous calibrations. These options allow for disregarding freak or random errors that are not shown over a trend or time.

In alternative embodiments the determination of the accuracy may be performed based on a comparison to positions determined by other sensor channels. For example, if a first position from a first channel is substantially different from a second position from a second channel (or several such channels), the accuracy can be determined based on the difference between the first and the second position.

In some such embodiments, the channels can be grouped as by how much the corresponding position differs from the average of all sensor positions.

In some embodiments, the priority for a channel is preset, based on user settings, or from factory settings. Such a preset order may reflect known or usual accuracies of a corresponding sensor.

In some embodiments, the priority for a channel is based on a training time, where for example a (V)SLAM-based navigation sensor channel is given a higher priority the longer it has been trained.

The channels may thus be ordered and selected accordingly.

In some embodiments, the robotic work tool is further configured to invalidate a channel based on the accuracy of the sensor channel. The channel can be determined to be reliable, if the accuracy falls above a qualification threshold, and determined to be unreliable, if the accuracy falls below a disqualification threshold. In some embodiments the qualification threshold is the same as the disqualification threshold. In some embodiments the qualification threshold is higher than the disqualification threshold. In some such embodiments, the channel may be regarded as possibly reliable if the accuracy falls in between the qualification threshold and the disqualification threshold.

In some embodiments the accuracy is determined as discussed above, and in some embodiments the accuracy may be determined based on other factors, such as environmental factors. For example, a wheel odometry sensor may be disqualified if it is raining outside, which would increase the risk for wheel slips.

If the RTK sensor should again be able to provide a trusted RTK position, the robotic work tool 100 will switch to using the RTK sensor again, and possibly calibrate the other channels accordingly. The RTK channel is different from the other channels, since it can calculate its position without its previous history. It is therefore reasonable that it can switch back and forth between 'reliable' (e.g. high accuracy) and 'not reliable' (e.g. low accuracy or no position at all).

There are two aspects of positioning a robotic work tool in a work area. The first relates to determining what we will refer to as a safety position. The safety position may in some embodiments not be an accurate position, such as determined by carefully determined coordinates, but a simple logical position, for example inside/outside the work area. When using magnetic sensors 170, the safety position can be determined relatively easy by determining the polarity of the sensed magnetic field, where the field will have one polarity inside the work area, and the opposite polarity outside.

When using other navigation means, the determination may become a bit more complicated, but it can still be simplified as the actual position need not be determined to a very high accuracy, as it is in most circumstances acceptable, if the lawnmower is a short distance, for example 500 mm, outside the boundary. The safety position can thus be determined even when only lower priority channels are available.

A second position is a local position which is used for performing advanced operating patterns or for staying out of specific areas, such as flowerbeds. As a reader would understand it would not be acceptable of a robotic lawnmower operated 500 mm inside a flower bed.

The inventors are therefore also proposing an alternative manner of determining a position, even when the RTK is not reliable. This is done by combining or fusing two or more sensor channels. In such embodiments, the robotic work tool is configured to select not only one channel but two (or more) and fuse the positions determined by them into one position to be used for navigation, such as for determining a local position.

Figure 3C shows a schematic view of how two (or more) sensor channels can be fused. The positions, P1 and P2, from the two channels, hereafter 1^{st} (first) and 2^{nd} (second) channels, are received and compared in a comparator block. The comparator block is a schematic and illustrative block and need not be a block in an implementation. The two channels are in some embodiments selected by the controller 110 as discussed in the above.

The robotic work tool (through the controller 110) compares the two positions from the 1^{st} and the 2^{nd} channel, and if they only differ by a small amount E, the position is determined to be reliable and can be used for navigation.

In some embodiments the amount that the channels' positions differ is compared to an error threshold E. In some embodiments, the error threshold is given as an absolute error, for example 1, 2, 5, 10, 20, 50 mm or any range there-in-between. In some embodiments, the error threshold is given as an error relative the size of the robotic work tool, for example 1, 2, 5, 10, 20, 50 % or any range there-in-between of the robotic work tools length, or of the length of the work tool 160. In some embodiments, the error threshold is given as a relative error, for example 1, 2, 5, or 10 of the average of the channel positions.

In some embodiments the position to be used, is a fused position which is determined as the average of the two (or more) channel positions, P1 and P2, fused position = (P1+P2)/2 in a simple notation. determined to be reliable and can be used for navigation. In some embodiments the fused position is determined as the average of the two (or more) channel positions disregarding outliers (i.e. positions deviating from the other positions by more than a threshold, such as falling outside 98, 95, 90, 85 or 80% (or 120, 115, 110, 105, 102%) the others, such as from the average of selected channel positions.

In some embodiments the fused position to be used, is the position coming from the channel having the highest priority.

Figure 4 shows a schematic view where the schematic views of figures 3A, 3B and 3C are combined into a schematic view of a sensor selection and fusing as discussed herein.

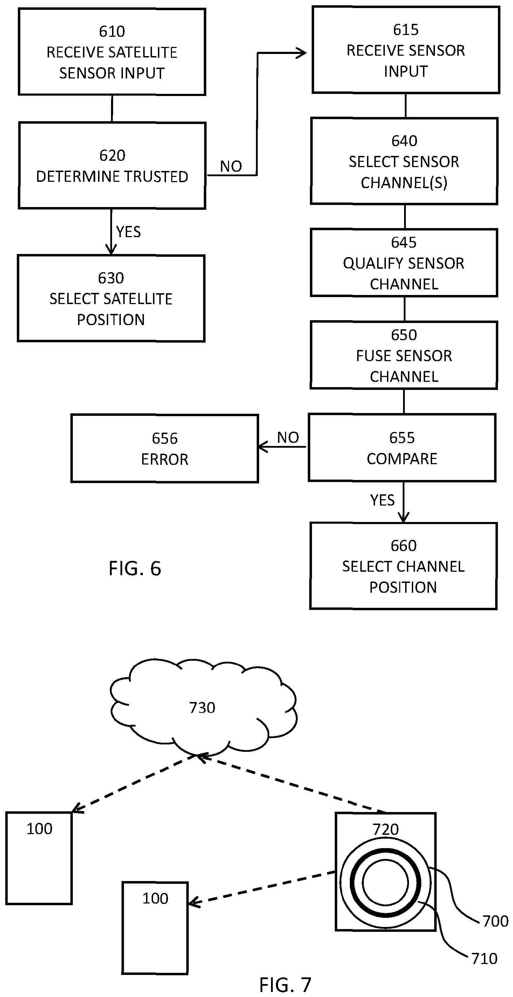

Figure 6 shows a flowchart for a general method according to herein. The method is for use in a robotic work tool as in figure 1 in a manner as discussed above in relation to figures 2, 3A, 3B, 3C and 4, namely for use in a robotic work tool system comprising a robotic work tool 100 arranged to operate in an operational area 205.

The robotic work tool, or rather the controller 110 of the robotic work tool 100, receives 610 sensor input from a satellite navigation sensor 175, such as an RTK sensor, the sensor input indicating a position for the robotic work tool, hereafter a satellite position referenced RTK in figure 4 (as in "determined by satellite sensor)", and determines 620 if the satellite position is a trusted position, and if so, the robotic work tool 100 selects 630 the satellite position as a position to be used for navigating the robotic work tool 100.

The robotic work tool also receives 615 sensor input from additional sensors 180 which are grouped in channels, where one channel may comprise input from one or more sensors 180. In some embodiments, each sensor 180 can only be part of one channel.

If the satellite position is determined to not be trusted, the robotic work tool selects 640 a channel (one or more) and uses 660 the position of the selected channel(s) as the position to be used for navigation. As discussed in the above, the channel(s) can be selected in different manners, for example based on a priority of the channel(s). As is also discussed in the above, the channels that can be selected may vary, as one or more channels may be disqualified. Such a determination 645 of being qualified or not may be determined by the sensor itself or by the controller, but for now it will be discussed as being determined by the controller.

In some embodiments the robotic work tool having selected two or more channels, may fuse 650 the two or more channels and use 660 a fused position as the position to be used for navigation. In some embodiments the robotic work tool fuses 650 the two or more channel positions by comparing 655 if they differ by less than an error threshold and if so uses 660 the fused position as the position to be used for navigation, as indicated by the Y arrow in figure 4 and YES arrow in figure 6. If it is determined that the two or more channel positions differ by more than the error threshold, the robotic work tool enter an error state as regards the position and takes an appropriate action such as for example, switching navigation method, searching for a reliable position in a predetermined search pattern or halting operation. This is indicated by the N arrow in figure 4 and NO arrow from the comparison 655 in figure 6.

As discussed above, the controller 110 (possibly through the controller of the sensor) is configured to determine if a sensor (and thereby the channel) is qualified or not. The example discussed above, is when the sensor (or channel) provides for determining an accuracy of the sensor (or channel) and disqualify the sensor (channel) based on such an accuracy of the additional sensor(s) 180 of the channel.

However, the inventors have also realized that there may be other circumstances where a sensor (or channel) should be disqualified. Such circumstances can be collectively referred to as environmental factors. The robotic work tool is thus in some embodiments further configured to determine an environmental factor and determine if a channel is qualified or not based on the environmental factor.

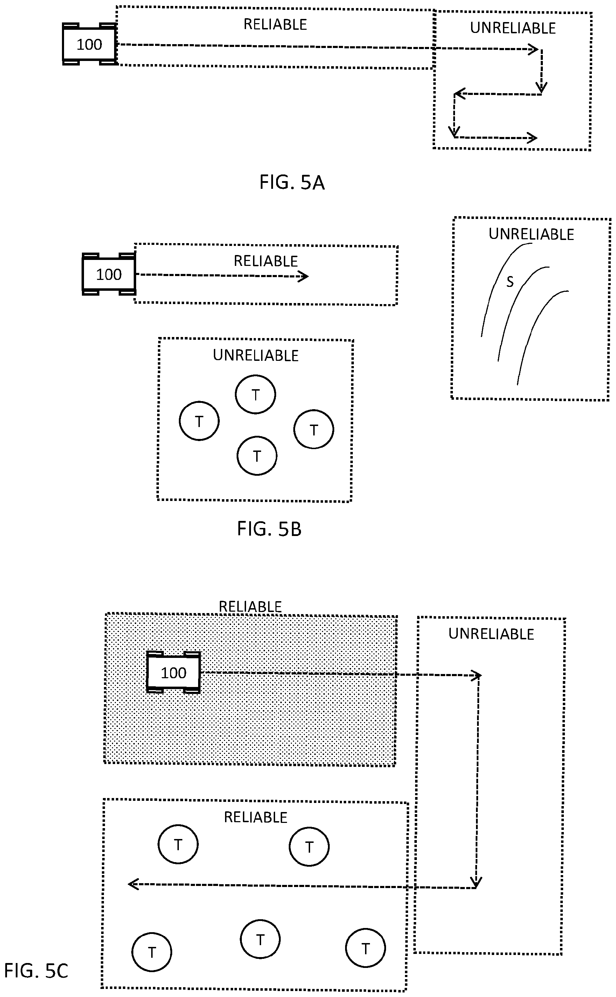

Figure 5A shows a situation where a robotic work tool is progressing along a path in a straight line. In such a line, there is little variation to be expected, and odometry sensors are likely to operate accurately. However, if there is a (sharp) turn or series of sharp turns to be made, the odometry sensors are likely to operate at a lower accuracy. The controller can thus determine or even predict when a sensor (or channel) will become unreliable, by determining a change in operating mode, such as when changing from operating in a straight line to operating through a (series of) (sharp) turns. What constitutes a sharp turn is dependent on the design of the robotic work tool, but to give an idea, a turn indicating a deviation of (more than) 30, 45 or 60 degrees or more may be considered sharp. What constitutes a series of turns depends on the design of the robotic work tool, the turns and how closely they are to appear. In some embodiments, the angular sum of turns within a time period or a travel distance can be used. For example, if an angular sum of 360 (indicating 4 turns at 90 degrees) is to be made within a travel distance of 5 meters, the odometry sensors will most likely not be very reliable.

The operating mode can thus be one environmental factor to base the determination of whether to disqualify or not on.

Figure 5A indicates where the operating mode is considered to be reliable, and where it is considered to be unreliable.

Figure 5B shows a situation where a robotic work tool 100 is travelling towards a portion of the area, where there are some or many obstacles that will need to be navigated correctly. For example, there may be many objects close to one another requiring a very high accuracy and repeated changes in direction (or operating modes). Another example is when a portion of the area is to be entered where there is an increased risk of slipping, which can have been determined during previous operations, or through a weather report.

Such portions of the work area are known to the robotic work tool through the map application stored in the memory 120. The robotic work tool 100 can thus predict when some sensors may be unreliable based on the map or rather the obstacles stored in the map. In some embodiments the memory 120 is thus further configured to store a map of the area, and the controller 110 is further configured to determine the environmental factor based on the map. Figure 5B shows two situations where portions have been indicated to be unreliable. On portion is where there is a slope (referenced S) where the risk of slipping or sliding is increased, and another portion is where there are many obstacles close together (here a group of trees, referenced T), where navigation will be required to be accurate, and some sensors may be blocked by the trees or otherwise unreliable.

As discussed in the above, the weather may play a factor in influencing the additional sensors. For example, if it is raining, the ground may become slippery and the odometry sensors may thus be unreliable. Alternatively, if it is foggy or also if raining, the visual navigation sensors may become unreliable. The robotic work tool may therefore, in some such embodiments, comprise an additional sensor 180 being a rain sensor, and thus determine a weather indication based on the rain sensor. Alternatively or additionally the robotic work tool may, in some such embodiments, be configured to receive weather indications through the communication interface 115, thus determine the environmental factor based on the received weather indication. The robotic work tool is thus in some embodiments further configured to determine the environmental factor based on a weather indication.

This may of course be grouped or linked to a portion of the work area. For example, a slope would be even more slippery when wet and thus affect the reliability of odometry sensors even more.

The inventors have also realized that there may be situations or environments where a visual navigation sensor is more reliable than in other situations or environments. Figure 5C shows an example situation where there is a portion of the area where there is grass growing, which can be detected by the visual navigation sensor. The navigation based on the visual navigation sensor can thus be regarded as reliable - at least for determining a safety position as it can be assumed to be safe to continue operating while being on grass - and the portion is indicated to be reliable in figure 5C.

Figure 5C also shows an example situation where there is a portion of the area where there are many features that can be detected by the visual navigation sensor. The navigation based on the visual navigation sensor can thus be regarded as reliable as the visual navigation will be able to navigate based on visual references. This portion is also indicated to be reliable in figure 5C.

Figure 5C also shows an example situation where there is a portion of the area where there aren't any (or very few) features that can be detected by the visual navigation sensor, and the visual navigation can therefore be expected to be unreliable in that portion and this portion is indicated to be unreliable in figure 5C.

The controller 110 is thus in some embodiments further configured to determine the environmental factor based on a number of features detected by the visual navigation sensor, and to disqualify the visual navigation sensor if the number of features falls below a discernibility threshold.

Figure 7 shows a schematic view of a computer-readable medium 700 carrying computer instructions 710 that when loaded into and executed by a controller of a robotic work tool 100, enables the robotic work tool 100 to implement the teachings herein. The computer-readable medium 700 may be tangible such as a hard drive or a flash memory, for example a USB memory stick or a cloud server. Alternatively, the computer-readable medium 700 may be intangible such as a signal carrying the computer instructions enabling the computer instructions to be downloaded through a network connection, such as an internet connection. In the example of figure 7, a computer-readable medium 700 is shown as being a hard drive or computer disc 700 carrying computer-readable computer instructions 710, being inserted in a computer disc reader 720. The computer disc reader 720 may be part of a cloud server 730 - or other server - or the computer disc reader 720 may be connected to a cloud server 730 - or other server. The cloud server 730 may be part of the internet or at least connected to the internet. The cloud server 730 may alternatively be connected through a proprietary or dedicated connection. In one example embodiment, the computer instructions are stored at a remote server 730 and be downloaded to the memory 120 of the robotic work tool 100 for being executed by the controller 110.

The computer disc reader 720 may also or alternatively be connected to (or possibly inserted into) a robotic work tool 100 for transferring the computer-readable computer instructions 710 to a controller of the robotic work tool 100 (presumably via a memory of the robotic work tool 100).

Figure 7 shows both the situation when a robotic work tool 100 receives the computer-readable computer instructions 710 via a server connection and the situation when another robotic work tool 100 receives the computer-readable computer instructions 710 through a wired interface. This enables for computer-readable computer instructions 710 being downloaded into a robotic work tool 100 thereby enabling the robotic work tool 100 to operate according to and implement the invention as disclosed herein.

### Examples of the present disclosure include:

1. A robotic work tool system (200) comprising a robotic work tool (100) arranged to operate in an operational area (205), and the robotic work tool (100) comprising a controller (110), a memory (120), an absolute position navigation sensor (175) and one or more additional navigation sensors (180) grouped in one or more channels, and wherein the controller (110) is configured to
   receive (510) sensor input from the absolute position navigation sensor (175), the sensor input indicating a absolute position for the robotic work tool (100),
   determine (520) if the absolute position is a trusted position, and if so,
   select (530) the absolute position as a position to be used for navigating the robotic work tool (100), wherein the robotic work tool (100) is further configured to
   receive (515) sensor input from the one or more additional sensors (180) through the one or more channels,
   and if the absolute position is determined to not be trusted, select (540) at least one channel and
   selecting (560) a position of the selected channel(s) as the position to be used for navigation.
2. The robotic work tool system (200) according to example 1, wherein the absolute position navigation sensor is a satellite navigation sensor and wherein the absolute position is a satellite position.
3. The robotic work tool system (200) according to example 1 or 2, wherein the controller (110) is further configured to receive (515) the sensor input from the one or more additional sensors (180) through the one or more channels, by selecting a channel based on a priority of the channel.
4. The robotic work tool system (200) according to any preceding example, wherein the controller (110) is further configured to
   determine (545) if a channel is qualified or not based on an accuracy of the additional sensor(s) (180) of the channel.
5. The robotic work tool system (200) according to any preceding example, wherein the controller (110) is further configured to
   determine an environmental factor and
   determine (545) if a channel is qualified or not based on the environmental factor.
6. The robotic work tool system (200) according to example 5, wherein the controller (110) is further configured to determine the environmental factor based on a weather indication.
7. The robotic work tool system (200) according to examples 5 or 6, wherein the memory (120) is further configured to store a map of the area, and wherein the controller (110) is further configured to determine the environmental factor based on the map.
8. The robotic work tool system (200) according to example 5, 6, or 7, wherein the additional sensors (180) comprises a visual navigation sensor, and wherein the controller (110) is further configured to determine the environmental factor based on a number of features detected by the visual navigation sensor, and to disqualify the visual navigation sensor if the number of features falls below a discernibility threshold.
9. The robotic work tool system (200) according to any of examples 4 to 8, wherein the controller (110) is further configured to determine (545) if the channel is qualified or not through a controller of the additional sensor(s) (180) of the channel.
10. The robotic work tool system (200) according to any of preceding example, wherein the controller (110) is further configured to receive (515) the sensor input from the one or more additional sensors (180) through the one or more channels, by
   selecting (540) two or more channels,
   fusing (550) the two or more channels to provide a fused position, and selecting (560) the fused position as the position to be used for navigation.
11. The robotic work tool system (200) according to example 10, wherein the controller (110) is further configured to fuse (550) the two or more channels by
   receiving a channel position (515) from each channel,
   comparing (555) if the channel positions differ by less than an error threshold, and if so
   select (560) the fused position as the position to be used for navigation.
12. The robotic work tool system (200) according to example 11, wherein the controller (110) is further configured to determine the fused position as a positional sum of the channel positions.
13. The robotic work tool system (200) according to example 11, wherein the controller (110) is further configured to determine the fused position as an average of the channel positions.
14. The robotic work tool system (200) according to any of examples 11 to 13, wherein the controller (110) is further configured to
   determine that the two or more channel positions differ by more than the error threshold, and if so, enter an error state.
15. The robotic work tool system (200) according to any preceding example, wherein the operational area (205) is arranged with a boundary (220) and the memory (120) being configured to store a map application (125) indicating the boundary (220), wherein the controller (110) is further configured to
   determine a safety-position indicating if the robotic work tool (100) is inside or outside the boundary and to
   determine a local position indicating the position of the robotic work tool (100) inside the work area, where the local position is utilized for navigating the robotic work tool (100) along operating patterns and wherein the controller (110) is further configured to
   determine the local position as the position to be used for navigation as per any preceding example.
16. The robotic work tool system (200) according to any preceding example, wherein one channel may comprise input from one or more additional sensors (180), but each additional sensor (180) can only be grouped in one selected channel.
17. The robotic work tool system (200) according to any preceding example, wherein the controller (110) is further configured to determine that the absolute position is trusted by checking a TRUSTED flag of the absolute position navigation sensor.
18. The robotic work tool system (200) according to example 17, wherein the controller (110) is further configured to set the TRUSTED flag if the controller determines that a distance between positions calculated by two (or more) selected channels is less than an error threshold.
19. The robotic work tool system (200) according to any preceding example, wherein the robotic work tool (100) is a robotic lawnmower (100).
20. A method for use in a robotic work tool system comprising a robotic work tool (100) arranged to operate in an operational area (205), and the robotic work tool (100) comprising an absolute position navigation sensor (175) and one or more additional navigation sensors (180) grouped in one or more channels, and wherein the method comprises
   receiving (610) sensor input from the absolute position navigation sensor (175), the sensor input indicating a absolute position for the robotic work tool (100), determining (620) if the absolute position is a trusted position, and if so,
   selecting (630) the absolute position as a position to be used for navigating the robotic work tool (100), and wherein the method further comprises
   receiving (615) sensor input from the one or more additional sensors (180) through the one or more channels,
   and if the absolute position is determined to not be trusted, selecting (640) at least one channel and
   selecting (660) a position of the selected channel(s) as the position to be used for navigation.
21. A computer-readable medium (700) carrying computer instructions (710) that when loaded into and executed by a controller (110) of a robotic work tool (100) enables the robotic work tool (100) to implement the method according to example 20.

## Claims

1. A robotic work tool system (200) comprising a robotic work tool (100) arranged to operate in an operational area (205), and the robotic work tool (100) comprising a controller (110), a memory (120), an absolute position navigation sensor (175) and one or more additional navigation sensors (180) grouped in one or more channels, and wherein the controller (110) is configured to
receive (510) sensor input from the absolute position navigation sensor (175), the sensor input indicating a absolute position for the robotic work tool (100),
determine (520) if the absolute position is a trusted position, and if so,
select (530) the absolute position as a position to be used for navigating the robotic work tool (100), wherein the robotic work tool (100) is further configured to
receive (515) sensor input from the one or more additional sensors (180) through the one or more channels,
and if the absolute position is determined to not be trusted, select (540) at least one channel and
selecting (560) a position of the selected channel(s) as the position to be used for navigation.

2. The robotic work tool system (200) according to claim 1, wherein the absolute position navigation sensor is a satellite navigation sensor and wherein the absolute position is a satellite position.

3. The robotic work tool system (200) according to claim 1 or 2, wherein the controller (110) is further configured to receive (515) the sensor input from the one or more additional sensors (180) through the one or more channels, by selecting a channel based on a priority of the channel.

4. The robotic work tool system (200) according to any preceding claim, wherein the controller (110) is further configured to
determine (545) if a channel is qualified or not based on an accuracy of the additional sensor(s) (180) of the channel.

5. The robotic work tool system (200) according to any preceding claim, wherein the controller (110) is further configured to
determine an environmental factor and
determine (545) if a channel is qualified or not based on the environmental factor.

6. The robotic work tool system (200) according to claim 5, wherein the controller (110) is further configured to determine the environmental factor based on a weather indication.

7. The robotic work tool system (200) according to claims 5 or 6, wherein the memory (120) is further configured to store a map of the area, and wherein the controller (110) is further configured to determine the environmental factor based on the map.

8. The robotic work tool system (200) according to claim 5, 6, or 7, wherein the additional sensors (180) comprises a visual navigation sensor, and wherein the controller (110) is further configured to determine the environmental factor based on a number of features detected by the visual navigation sensor, and to disqualify the visual navigation sensor if the number of features falls below a discernibility threshold.

9. The robotic work tool system (200) according to any of claims 4 to 8, wherein the controller (110) is further configured to determine (545) if the channel is qualified or not through a controller of the additional sensor(s) (180) of the channel.

10. The robotic work tool system (200) according to any of preceding claim, wherein the controller (110) is further configured to receive (515) the sensor input from the one or more additional sensors (180) through the one or more channels, by
selecting (540) two or more channels,
fusing (550) the two or more channels to provide a fused position, and
selecting (560) the fused position as the position to be used for navigation.

11. The robotic work tool system (200) according to claim 10, wherein the controller (110) is further configured to fuse (550) the two or more channels by
receiving a channel position (515) from each channel,
comparing (555) if the channel positions differ by less than an error threshold, and if so
select (560) the fused position as the position to be used for navigation.

12. The robotic work tool system (200) according to claim 11, wherein the controller (110) is further configured to determine the fused position as a positional sum of the channel positions.

13. The robotic work tool system (200) according to claim 11, wherein the controller (110) is further configured to determine the fused position as an average of the channel positions.

14. The robotic work tool system (200) according to any of claims 11 to 13, wherein the controller (110) is further configured to
determine that the two or more channel positions differ by more than the error threshold, and if so, enter an error state.

15. The robotic work tool system (200) according to any preceding claim, wherein the operational area (205) is arranged with a boundary (220) and the memory (120) being configured to store a map application (125) indicating the boundary (220), wherein the controller (110) is further configured to
determine a safety-position indicating if the robotic work tool (100) is inside or outside the boundary and to
determine a local position indicating the position of the robotic work tool (100) inside the work area, where the local position is utilized for navigating the robotic work tool (100) along operating patterns and wherein the controller (110) is further configured to
determine the local position as the position to be used for navigation as per any preceding claim.
